(19) Europäisches Patentamt
European Patent Office
Office européen des brevets

(11) **EP 1 149 006 B1**

(12) **EUROPÄISCHE PATENTSCHRIFT**

(45) Veröffentlichungstag und Bekanntmachung des Hinweises auf die Patenterteilung:
**13.03.2013 Patentblatt 2013/11**

(51) Int Cl.:
***G05B 9/02*** (2006.01)   ***B60T 8/1755*** (2006.01)
***B60T 8/88*** (2006.01)

(21) Anmeldenummer: **00901131.3**

(22) Anmeldetag: **25.01.2000**

(86) Internationale Anmeldenummer:
**PCT/EP2000/000538**

(87) Internationale Veröffentlichungsnummer:
**WO 2000/046087 (10.08.2000 Gazette 2000/32)**

(54) **VERFAHREN UND VORRICHTUNG ZUR SENSORÜBERWACHUNG, INSBESONDERE FÜR EIN ESP-SYSTEM FÜR FAHRZEUGE**

METHOD AND DEVICE FOR SENSOR MONITORING, ESPECIALLY FOR AN ESP SYSTEM FOR MOTOR VEHICLES

PROCEDE ET DISPOSITIF DE SURVEILLANCE DE DETECTEURS, EN PARTICULIER POUR UN SYSTEME ESP POUR VEHICULES

(84) Benannte Vertragsstaaten:
**FR IT**

(30) Priorität: **01.02.1999 DE 19903934**
                **25.06.1999 DE 19929155**
                **24.08.1999 DE 19939872**

(43) Veröffentlichungstag der Anmeldung:
**31.10.2001 Patentblatt 2001/44**

(73) Patentinhaber: **Continental Teves AG & Co. oHG 60488 Frankfurt am Main (DE)**

(72) Erfinder: **DING, Eve, Limin D-01968 Senftenberg (DE)**

(56) Entgegenhaltungen:
**US-A- 5 809 444**

• **DORR R ET AL: "DETECTION, ISOLATION, AND IDENTIFICATION OF SENSOR FAULTS IN NUCLEAR POWER PLANTS" IEEE TRANSACTIONS ON CONTROL SYSTEMS TECHNOLOGY,US,IEEE INC. NEW YORK, Bd. 5, Nr. 1, 1. Januar 1997 (1997-01-01), Seiten 42-60, XP000690971 ISSN: 1063-6536**

**Beschreibung**

Die Erfindung betrifft ein Verfahren zur Überwachung von Sensoren, die jeweils einzelne Prozeßführungs- oder Prozeßmeßgrößen eines fahrdynamischen Prozesses für ein elektronisches Stabilitätsprogramm (ESP) für Fahrzeuge erfassen, sowie ein ESP-System mit einer Vorrichtung zur Überwachung von Sensoren.

Elektronische Stabilitätsprogramme dieser Art sind fahrdynamische Regelsysteme für Fahrzeuge, die dazu dienen, den Fahrer in kritischen Fahrsituationen während des Bremsens, Beschleunigens und Lenkens zu unterstützen und dort einzugreifen, wo der Fahrer selbst keine direkte Eingriffsmöglichkeit hat. Das Regelsystem unterstützt den Fahrer beim Bremsen, insbesondere auf einer Fahrbahn mit niedrigem oder wechselndem Reibwert, auf der das Fahrzeug wegen blockierender Räder nicht mehr steuerbar sein oder ins Schleudern geraten könnte, ferner beim Beschleunigen, wobei die Gefahr des Durchdrehens der Antriebsräder besteht, sowie schließlich beim Lenken in einer Kurve, in der das Fahrzeug über- oder untersteuern könnte. Insgesamt wird damit nicht nur der Komfort, sondern auch die aktive Sicherheit wesentlich verbessert.

Einem solchen Regelsystem liegt ein geschlossener Regelkreis zugrunde, der im Normalbetrieb des Fahrzeugs typische Regelaufgaben übernimmt und in extremen Fahrsituationen das Fahrzeug so schnell wie möglich abfangen soll. Als Istwertgeber sind dabei Sensoren zur Erfassung der verschiedenen fahrdynamischen Parameter von besonderer Bedeutung. Eine plausible Regelung setzt voraus, daß die Sensoren den Istzustand der Regelstrecke korrekt wiedergeben. Dies ist bei Fahrstabilitätsregelungen in extremen Fahrsituationen, in denen eine Regelabweichung schon innerhalb einer sehr kurzen Zeit ausgeregelt werden muß, besonders wichtig. Aus diesem Grunde müssen bei einem elektronischen Stabilitätsprogramm die ESP-Sensoren (Gierratensensor, Querbeschleunigungssensor, Lenkwinkelsensor) ständig überwacht werden. Eine entsprechende Online-Sensorüberwachung hat den Zweck, Fehler in den ESP-Sensoren frühzeitig zu erkennen, damit eine Fehlregelung, die das Fahrzeug in einen sicherheitskritischen Zustand bringen könnte, ausgeschlossen wird.

Dokument US 5 809 444 A offenbart ein System zur Regelung der Fahrdynamik von Kraftfahrzeugen.

Der Erfindung liegt deshalb die Aufgabe zugrunde, ein Verfahren und eine Vorrichtung zur Überwachung von Sensoren der eingangsgenannten Art zu schaffen, das/die eine für ein elektronisches Stabilitätsprogramm (ESP) für Fahrzeuge erforderliche Zuverlässigkeit aufweist.

Gelöst wird diese Aufgabe gemäß Anspruch 1 mit einem Verfahren der eingangs genannten Art, das sich auszeichnet durch eine zyklisch-sequentielle Überwachung des Verlaufes der Ausgangssignale mindestens eines Gierratensensors, eines Querbeschleunigungssensors und eines Lenkwinkelsensors mit folgenden Schritten: Erstellen analytischer Redundanzen für eine aktuell zu überwachende Prozeßführungs- oder Prozeßmeßgröße, also Gierrate, Querbeschleunigung oder Lenkwinkel, aus aktuell nicht zu überwachenden Prozeßführungs- und/oder Prozeßmeßgrößen eines aktuell betriebenen fahrdynamischen Prozesses mittels eines Mehrfachprozeßmodells für einen Normalbetrieb, Erzeugen von Residuen durch Subtraktion der erstellten, redundanten analytischen Redundanzen von der aktuell zu überwachenden Prozeßführungs- oder Prozeßmeßgröße, Auswerten der Residuen mit einer Residuenauswertefunktion und Vergleichen des ausgewerteten Residuums mit einem vorgegebenen Schwellwert und Erzeugen einer Fehlermeldung, wenn das Residuum den Schwellwert für mindestens eine vorbestimmte Überwachungszeit erreicht.

Die Aufgabe wird ferner gemäß Anspruch 6 mit einem ESP-System gelöst, welches eine Vorrichtung der eingangs genannten Art aufweist, die eine erste Einrichtung zur Berechnung analytischer Redundanzen für eine aktuell zu überwachende Prozeßführungs- oder Prozeßmeßgröße aus aktuell nicht zu überwachenden Prozeßführungs- und/oder Prozeßmeßgrößen eines aktuell betriebenen Prozesses mittels eines Mehrfachprozeßmodells für einen Normalbetrieb, eine zweite Einrichtung zur Erzeugung von Residuen durch Subtraktion der errechneten, redundanten analytischen Redundanzen von der aktuell zu überwachenden Prozeßführungs- oder Prozeßmeßgröße, eine dritte Einrichtung zur Auswertung der Residuen mit einer Residuenauswertefunktion, eine vierte Einrichtung zur Erzeugung eines Schwellwertes, sowie eine fünfte Einrichtung zum Vergleichen des ausgewerteten Residuums mit dem Schwellwert und zum Erzeugen einer Fehlermeldung umfasst, wenn das Residuum den Schwellwert für mindestens eine vorbestimmte Überwachungszeit erreicht.

Die Unteransprüche haben vorteilhafte Weiterbildungen der Erfindung zum Inhalt.

Weitere Einzelheiten, Merkmale und Vorteile der Erfindung ergeben sich aus der folgenden Beschreibung einer bevorzugten Ausführungsform anhand der Zeichnung. Es zeigt:

Fig. 1 ein Blockschaltbild eines fahrdynamischen Regelsystems;

Fig. 2 eine schematische Darstellung der Struktur eines ESP-Systems;

Fig. 3 das Grundprinzip eines Fehlerdiagnosesystems;

Fig. 4 eine Struktur eines modellgestützten Überwachungssystem für die ESP-Sensoren;

Fig. 5 ein Blockschaltbild einer erfindungsgemäßen Sensorüberwachung;

Fig. 6a, b, c eine Darstellung der Meßergebnisse bei einer Fehlersimulation; und

Fig. 7a, b, c eine Darstellung der Meßergebnisse bei einem Wedelmanöver.

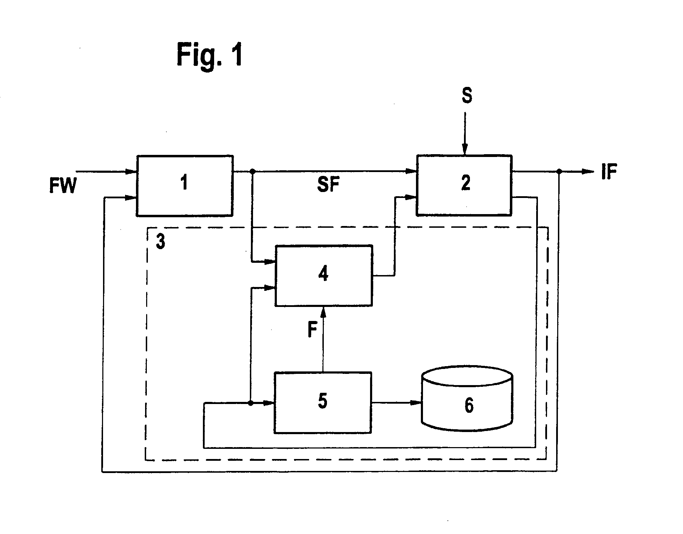

Der Vorgang des Autofahrens kann gemäß Figur 1 im regelungstechnischen Sinne als ein Regelkreis betrachtet werden, bei dem ein Fahrer 1 den Regler und ein Fahrzeug 2 die Regelstrecke darstellt. Die Führungsgrößen sind dabei die persönlichen Fahrwünsche FW des Fahrers, die er durch eine fortlaufende Beobachtung des Straßenverkehrs erstellt. Die Istwerte IF sind die Momentanwerte für Fahrtrichtung und Geschwindigkeit, die der Fahrer über seine Augen bzw. das Fahrgefühl erfaßt. Die Stellgrößen SF sind schließlich der Lenkradwinkel, die Stellung des Getriebes sowie die Stellungen von Gas- und Bremspedal, die von dem Fahrer aufgrund der Abweichungen zwischen den Soll- und den Istwerten erstellt werden.

Eine derartige Regelung wird häufig durch Störungen S wie Reibwertänderungen, Fahrbahnunebenheiten, Seitenwind oder andere Einflüsse erschwert, da der Fahrer diese nicht präzise erfassen kann, jedoch bei der Regelung berücksichtigen muß. Aus diesem Grunde kann der Fahrer 1 zwar im allgemeinen die ihm übertragenen Aufgaben, nämlich den Prozeß des Autofahrens zu regeln und zu beobachten, in normalen Fahrzuständen aufgrund seiner Ausbildung und der gesammelten Erfahrung ohne Schwierigkeiten bewältigen. In Extremsituationen und / oder bei den genannten außergewöhnlichen Fahrzuständen, bei denen die physikalischen Reibkraftgrenzen zwischen der Fahrbahn und den Reifen überschritten werden, besteht jedoch die Gefahr, daß der Fahrer zu spät oder falsch reagiert und die Kontrolle über sein Fahrzeug verliert.

Um auch diesen Fahrsituationen Rechnung tragen zu können, wird das fahrdynamische Regelsystem mit einem unterlagerten Regelkreis 3 (ESP) ergänzt, der gemäß Figur 1 einen Regelalgorithmus 4, eine Systemüberwachung 5 und einen Fehlerspeicher 6 umfaßt. Gemessene Fahrzustandsgrößen werden dabei der Systemüberwachung 5 und dem Regelalgorithmus 4 zugeführt. Die Systemüberwachung 5 erzeugt ggf. eine Fehlermeldung F, die dem Fehlerspeicher 6 und dem Regelalgorithmus 4 zugeführt wird. Der Regelalgorithmus 4 beaufschlagt dann in Abhängigkeit von den vom Fahrer 1 erzeugten Stellgrößen das Fahrzeug 2. Mit diesem Regelkreis werden typische Regelaufgaben ausgeführt. In extremen Fahrsituationen wird das Fahrzeug so schnell wie möglich wieder abgefangen.

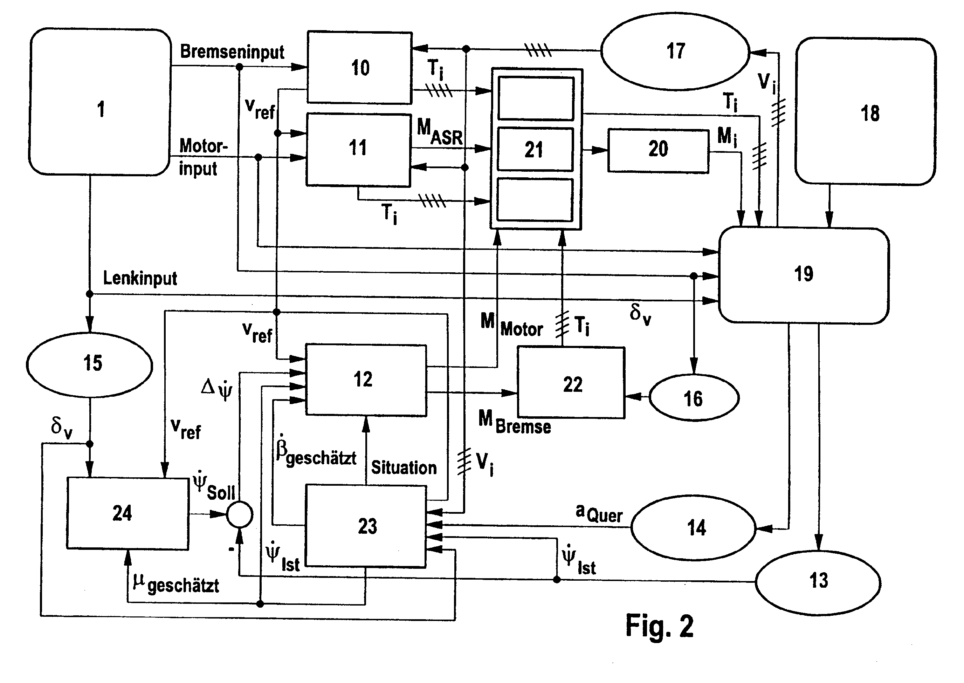

Figur 2 zeigt die Struktur eines solchen Regelkreises, der im wesentlichen ein Antiblockiersystem 10, eine Antriebsschlupfregelung 11 und eine Giermomentregelung 12 umfaßt. Weiterhin sind ein Gierratensensor 13, ein Querbeschleunigungssensor 14, ein Lenkwinkelsensor 15, ein Drucksensor 16 und vier Radgeschwindigkeitssensoren 17 vorgesehen, die sowohl als Istwertgeber zur Ermittlung der Regelabweichung, als auch zur Bildung eines Gierratensollwertes und verschiedener Zwischengrößen eingesetzt werden.

Die von dem Fahrer 1 durch Betätigung eines Gas- und Bremspedals sowie des Lenkrades erzeugten Prozeßführungsgrößen werden der Antriebsschlupfregelung 11, dem Antiblockiersystem 10 und dem Drucksensor 16 beziehungsweise dem Lenkwinkelsensor 15 zugefügt. Fahrzeugspezifische Nichtlinearitäten, Schwankungen der Reibwerte, Seitenwind-Einflüsse usw. sind als Störungen oder unbekannte Größen 18 zusammengefaßt und beeinflussen die Fahrzeug-Längs- und Querdynamik 19. Diese Dynamik 19 wird ferner durch die genannten Führungsgrößen sowie die Ausgangssignale einer Motormanagementeinheit 20 beeinflußt und beaufschlagt die Radgeschwindigkeitssensoren 17, den Gierratensensor 13, den Querbeschleunigungssensor 14 sowie den Drucksensor 16. Eine Regelarbitration 21, der die Ausgangssignale des Antiblockiersystems 10, der Antriebsschlupfregelung 11, der Giermomentregelung 12 und eines Bremseneingriffsalgorithmus 22 zugeführt werden, dient zur Prioritätsverteilung dieser Signale im Hinblick auf ihr Einwirken auf die Motormanagementeinheit 20 oder direkt auf die Fahrdynamik 19. Der Bremseneingriffsalgorithmus 22 wird dabei von der Giermomentregelung 12 und dem Drucksensor 16 beaufschlagt. Schließlich ist eine Fahrzustandserkennung 23 vorgesehen, der die Signale des Lenkwinkelsensors 15, des Gierratensensors 13, des Querbeschleunigungssensors 14 sowie der Radgeschwindigkeitssensoren 17 zugeführt werden und deren Ausgangssignale die Giermomentregelung 12 sowie ein Einspurreferenzmodell 24, mit dem eine gewünschte Soll-Gierrate erzeugt wird, beaufschlagt.

Wie bereits erläutert wurde, kann ein falsches Sensorsignal eine gefährliche unplausible Regelung verursachen. Ein Ausfall des Gierratensensors 13 kann zum Beispiel dazu führen, daß ein Zusatzgiermoment das Fahrzeug plötzlich zur Seite zieht, obwohl der Fahrer geradeaus fahren will. Dies rührt daher, daß während einer Geradeausfahrt der Lenkwinkel und damit der Sollwert der Gierrate gleich Null ist, der Istwert der Gierrate wegen des Sensorausfalls jedoch einen unbestimmten Wert hat, so daß die Giermomentregelung 12 zur Ausregelung dieser Regelabweichung ein Zusatzgiermoment erzeugt. Aus diesem Grund ist eine Online-Überwachung der Sensoren von großer Bedeutung. Diese Überwachung muß einen Sensorausfall so frühzeitig erkennen können, daß das ESP-System rechtzeitig teilweise oder ganz stillgelegt werden kann.

Das erfindungsgemäße Sensorüberwachungskonzept besteht aus einer mehrstufigen Funktionalitätsprüfung der Sensoren, in der zwei Verfahren angewendet werden: Einerseits wird eine elektrische Überwachung durchgeführt, mit der geprüft wird, ob die zu überwachenden Sensorsignale innerhalb ihrer zugelassenen Fehlerbänder liegen. Andererseits wird eine analytisch redundant gestützte Überwachung vorgenommen, mit der die Signale in ihren Gesamtnutzbereichen überwacht werden.

In einer ersten Stufe werden durch die elektrische Überwachung die Sensorversorgungsspannung und die Verkabelung geprüft. In einer zweiten Stufe werden solche Sensoren, die aufgrund ihrer Bedeutung "intelligent" konstruiert sind, laufend durch sich selbst geprüft. Bei einem internen Sensorausfall geht das Sensorsignal in das Fehlerband. Folglich lassen sich solche Sensorfehler auch durch die elektrische Überwachung erfassen.

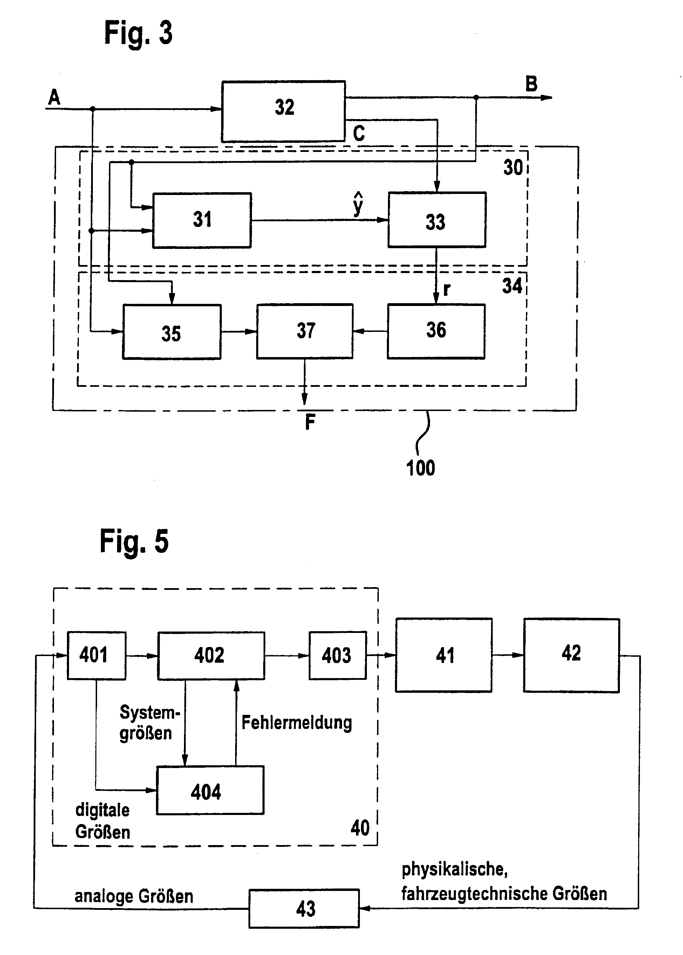

Mit der elektrischen Überwachung wird dabei ausschließlich geprüft, ob die Sensorsignale in ihren Gültigkeitsbereichen liegen. Eine Erfassung anderer Sensorfehler, wie zum Beispiel eine falsche oder gelockerte Einbaulage, eine Masseunterbrechung ist damit jedoch nicht möglich. Aus diesem Grunde werden in einer dritten Stufe zyklisch-sequentiell die Verläufe der einzelnen Sensorsignale in ihren Nutzbereichen überwacht, und zwar mittels analytischer Redundanzen, die aus den aktuell nicht überwachten Sensor-Ausgangssignalen aufgrund ihrer physikalischen Abhängigkeiten berechnet werden. Hierfür wird ein modellgestütztes ESP-Überwachungs- und Fehlerdiagnosesystem geschaffen, dessen Grundstruktur in Figur 3 dargestellt ist.

Das Fehlerdiagnosesystem 100 besteht im wesentlichen aus zwei Teilen, nämlich einem Residuengenerator 30 und einer Residuenauswerteeinheit 34.

Der Residuengenerator 30 umfaßt eine erste Einrichtung 31 zur Berechnung analytischer Redundanzen aus aktuell nicht zu überwachenden Prozeßführungsgrößen A und/oder den durch einen aktuell betriebenen Prozeß 32 erzeugten und aktuell nicht zu überwachenden Prozeßmeßgrößen B, und zwar für eine aktuell zu überwachende Prozeßführungs- oder Prozeßmeßgröße C unter Anwendung eines Mehrfachprozeßmodells (G1-G4; Q1-Q4; L1-L4, siehe unten) für einen Normalbetrieb. Weiterhin ist eine zweite Einrichtung 33 zur Erzeugung von Residuen r durch Subtraktion der errechneten, redundanten analytischen Redundanzen von der aktuell zu überwachenden Prozeßführungs- oder Prozeßmeßgröße C vorgesehen.

Die Residuenauswerteeinheit 34 umfaßt eine dritte Einrichtung 36 zur Auswertung der Residuen r mit einer Residuenauswertefunktion, sowie eine vierte Einrichtung 35 zur Erzeugung eines Schwellwertes. Dieser Einrichtung 35 werden auch die aktuell nicht zu überwachenden Prozeßführungs- und/oder Prozeßmeßgrößen A, B zugeführt, um den Schwellwert bei einer relativ hohen Ungenauigkeit des Mehrfachprozeßmodells anheben und bei einer relativ geringen Ungenauigkeit des Modells absenken zu können. Schließlich ist eine fünfte Einrichtung 37 zum Vergleichen des ausgewerteten Residuums mit dem Schwellwert und zum Erzeugen einer Fehlermeldung F vorgesehen, wenn das Residuum den Schwellwert für mindestens eine vorbestimmte Überwachungszeit erreicht.

Zur Verdeutlichung der der Erfindung zugrundeliegenden Problematik sowie zum Verständnis der in Figur 3 allgemein dargestellten erfindungsmäßen Lösung sollen zunächst folgende Hintergrundinformationen gegeben werden:

Bei Verwendung nur eines einzigen Prozeßmodells (anstelle eines Mehrfachmodells) zur Residuenerzeugung kann man zwar bereits Informationen über den aktuellen Prozeßzustand und damit auch über mögliche Fehlfunktionen gewinnen. Allerdings hängt die Leistungsfähigkeit sehr stark von der Qualität des angewandten Prozeßmodells ab. Wenn die Ungenauigkeiten des Prozeßmodells steigt, ist es erforderlich, den Schwellwert zu erhöhen, um einen Fehlalarm zu vermeiden. Dies hat dann wiederum zur Folge, daß zahlreiche Fehler unbemerkt bleiben. Versucht man im Gegensatz dazu, die Genauigkeit des Prozeßmodells zu erhöhen, was gleichzeitig eine Steigerung der Modellkomplexität bedeutet, so scheitert man in der Praxis häufig an dem mit der Implementierung des Modells verbundenen hohen Aufwand bei der Online-Berechnung und dem hohen Anspruch an die Entwicklung und Wartung. Folglich spielt ein Kompromiß zwischen der Modellgenauigkeit und der Einstellung der Schwellwerte und damit der Systemempfindlichkeit eine zentrale Rolle bei der Entwicklung eines modellgestützten ESP-Fehlerdiagnosesystems.

Zu berücksichtigen ist dabei auch, daß der Prozeß des Autofahrens bekanntlich in starkem Maße durch viele unbekannte Umgebungsfaktoren geprägt ist. Hinzu kommt noch, daß die Fahrdynamik nur bis zu einem gewissen Grad mathematisch beschrieben werden kann. Andererseits ist die Grenze der Implementierbarkeit von Anfang an durch die Hardware-Bedingung festgelegt. Alle diese Randbedingungen verlangten einen Lösungsansatz, der zwar auf dem Prinzip der modellgestützten Verfahren basiert, dessen Einsatz jedoch in einem ESP-System gerechtfertigt sein muß.

Die Grundidee der modellgestützten Fehlerdiagnose ist die Prüfung physikalischer Gesetzmäßigkeiten, die in Form eines mathematischen Modells dargestellt sind. Es sei angenommen, daß

$$y = f(u_1, \ldots, u_m) \qquad [\text{Gl. 1}]$$

eine dieser physikalischen Gesetzmäßigkeiten beschreibt, wobei y das Ausgangssignal des zu überwachenden Sensors bezeichnet und $u_1, \ldots, u_m$ die bekannten oder gemessenen physikalischen Größen und f eine mathematische Funktionen darstellt. In diesem Fall wird die analytische Redundanz $\hat{y}$ aus

$$\hat{y} = f(u_1, \ldots, u_m)$$

gebildet und das Residuum r ergibt sich wie folgt:

$$r = y - \hat{y}$$

Das Residuum ist im fehlerfreien Fall im wesentlichen gleich Null. Wenn ein Sensorfehler auftritt, verliert diese Gesetzmäßigkeiten ihre Gültigkeit, so daß das Residuum signifikant von Null abweicht. Die Schwierigkeit bei der Umsetzung dieser Idee liegt darin, daß das Modell den Prozeßablauf nur teilweise beschreibt. Diese sogenannte Modellungenauigkeit läßt sich durch eine Erweiterung des Prozeßmodells zu

$$y = f(u_1, \ldots, u_m) + \Delta$$

ausdrücken, wobei $\Delta$ eine unbekannte Größe ist, die von dem Prozeßzustand abhängig ist. Eine zuverlässige modellgestützte Fehlerdiagnose setzt voraus, daß der Einfluß von $\Delta$ auf das Residuum r möglichst gering gehalten wird.
Es gibt prinzipiell zwei Wege, um den Einfluß von $\Delta$ zu unterdrücken:

1.) Erhöhung der Robustheit des Überwachungssystems durch Anwendung moderner robuster Regelungstheorien: dies ist ein passiver Weg, der im allgemeinen einen aufwendigen Entwurf und einen höheren Rechenaufwand (sowohl Off-Line, als auch On-Line) erfordert.

2.) Gewinnung zusätzlicher Informationen: dies ist ein aktiver Weg, der sich auf zwei Arten realisieren läßt, und zwar einerseits durch eine Verbesserung des Modells, was eine Gewinnung der Off-Line-Information, jedoch gleichzeitig auch einen zusätzlichen On-Line-Rechenaufwand bedeutet, andererseits durch eine Ausnutzung von zusätzlichen On-Line-Informationen. Dieser Weg hat sich zur erfindungsgemäßen Lösung der genannten Problematik als besonders vorteilhaft erwiesen.

Die Nutzung der zusätzlichen On-Line-Informationen ermöglicht es, für einen zu überwachenden Sensor ein mehrfaches (redundantes) Modell zu bilden und ferner das Verhalten und die Funktionalität dieses Sensors zu rekonstruieren, und zwar anhand der Signale von unterschiedlichen, nicht zu überwachenden Sensoren bzw. Signalquellen. Diese redundante analytische Redundanz erhöht zum einem die Zuverlässigkeit des Überwachungssystems, zum anderen aber auch die Robustheit gegen Modellungenauigkeiten. Im folgenden wird eine bevorzugte Ausführungsform des erfindungsgemäßen Verfahrens vorgestellt, mit dem diese Grundidee umgesetzt werden kann.
Es sei angenommen, daß für das Verhalten eines zu überwachenden Sensorsignals mit folgendem Gleichungssystem

$$y = f_1(u_{11}, \ldots, u_{1m}) + \Delta_1 \quad , \quad PZ \in GB_1$$

$$\vdots \qquad\qquad\qquad \vdots$$

$$y = f_n(u_{n1}, \ldots, u_{nm}) + \Delta_n \quad , \quad PZ \in GB_n$$

ein Modell gebildet werden kann, wobei $u_{ij}$, i = 1,...,n; j = 1,...,m Signale aus unterschiedlichen Quellen bezeichnen und $f_1, \ldots, f_n$ Teilmodelle, $\Delta_1, \ldots \Delta_n$ Modellungenauigkeiten der einzelnen Teilmodelle, PZ den Prozeßzustand und $GB_i$, i = 1,..., n den Bereich, in dem das Teilmodell gültig ist, bezeichnen.
Die Gültigkeit und die Modellungenauigkeit der einzelnen Teilmodelle sind von dem Prozeßzustand abhängig. Das Problem besteht nun darin, anhand des Mehrfachmodells ein Residuum zu bilden, das auf der einen Seite für die zu entdeckenden Fehler empfindlich und auf der anderen Seite gegen Modellungenauigkeiten robust ist.
Die Fahrsituationen werden hierzu in zwei Gruppen eingeteilt:

1.) Instationäre Fahrverhalten, bei denen die Modellungenauigkeit stark ausgeprägt ist und nur eine geringe Anzahl von Teilmodellen gültig ist und

2.) Stationäre Fahrverhalten, deren Gemeinsamkeit darin besteht, daß die Mehrzahl von Teilmodellen gültig ist und daß deren Modellungenauigkeit gering ist.

Zu 1.): Instationäres Fahrverhalten: Da der absolute Wert des Residuums als Residuenauswertefunktion verwendet wird, ergibt sich das Residuum r

$$| r | = | y - \hat{y}_i | = | y - f_i (u_{i1},\ldots,u_{im}) |$$

$$= \min_i \left\{ | y - f_i (u_{i1},\ldots,u_{im}) |, i = 1,\ldots,n \right\} \quad [Gl. 2]$$

von allen möglichen Residuen am robustesten gegen Modellungenauigkeiten und gleichzeitig auch am unempfindlichsten gegen Fehler. Somit wird für diese Fahrsituation festgelegt:

Wenn die Anzahl der gültigen Teilmodelle deutlich kleiner ist als eine vorgegebene Zahl (<< n), dann wird das Residuums nach dem Prinzip gemäß [Gl. 2] ausgewertet.

Wir nennen diese Regel "minimum of all", deren Grundidee darin besteht, daß im instationären Bereich, wo die Modellungenauigkeit stark ausgeprägt ist, die Robustheit verstärkt gewichtet wird.

Zu 2.): Stationäres Fahrverhalten: Wenn

$$PZ \in GB_1 \cap GB_2 \cap \quad , \ldots , \quad \cap GB_n$$

ist, was bedeutet, daß alle oder fast alle Teilmodelle gültig sind und somit im allgemeinen ein normaler Prozeßzustand gegeben ist, wird das Residuum mit dem nachstehenden Algorithmus ausgewählt:

Schritt 1: Bildung des Mittelwertes $\bar{y}$

$$\bar{y} = 1 / _{n+1} \left( \sum_{i=1}^{n} \hat{y}_i + \hat{y}_{i+1} \right), \quad \hat{y}_{i+1} = y$$

Schritt 2: Berechnung von $| \bar{y} - \hat{y}_i |$, i = 1,...,n+1 und Auswahl von $\hat{y}_{i1}, \hat{y}_{i2}, \hat{y}_{i3}$, welche die geringsten Abweichungen von $\bar{y}$ aufweisen, d.h.

$$| \bar{y} - \hat{y}_{i1} |, \quad | \bar{y} - \hat{y}_{i2} |, \quad | \bar{y} - \hat{y}_{i3} | < | \bar{y} - \hat{y}_{j} |, \quad j \neq i_1, i_2, i_3,$$

$$j \in \{1,\ldots,n+1\}$$

Schritt 3: Bildung des Residuums r:

Es sei angenommen, daß $\hat{y}_{i1} \leq \hat{y}_{i2} \leq \hat{y}_{i3}$ ist, dann gilt

$$r = y - \hat{y}_{i2}$$

Um das Funktionsprinzip dieses Algorithmus zu erläutern, betrachten wir zwei Fälle:

a.) Fehlerfreier Betrieb: in diesem Fall gilt für den "best case":

$$\hat{y}_{i2} = y \quad \Rightarrow \quad r = y - y = 0$$

Dies bedeutet, daß die Modellungenauigkeit keinen Einfluß auf das Residuum hat. Für den "worst case" gilt:

$$y \notin \{ \hat{y}_{i1}, \hat{y}_{i2}, \hat{y}_{i3} \} \quad \Rightarrow \quad r = y - \hat{y}_{i2}$$

Die maximal mögliche Abweichung läßt sich damit gemäß folgender Gleichung

$$|y - \hat{y}_{i2}| = |y - \bar{y} + \bar{y} - \hat{y}_{i2}| \leq |y - \bar{y}| + |\bar{y} - \hat{y}_{i2}| \leq 2 |y - \bar{y}|$$

begrenzen. Da die Bildung des Mittelwertes die Modellungenauigkeit in den meisten Fällen unterdrückt, wird auch die durch die Modellungenauigkeit verursachte Abweichung gering gehalten.

b.) Sensorfehler: in diesem Fall gilt für den "normal case":

$$y \notin \{ \hat{y}_{i1}, \hat{y}_{i2}, \hat{y}_{i3} \} \quad \Rightarrow \quad r = y - \hat{y}_{i2} \neq 0$$

Wegen des Fehlers wird das Sensorsignal y stark von seinem normalen Wert und damit auch von $\hat{y}_{ik}$, k = 1, 2, 3 abweichen. Als Folge ist die Differenz zwischen y und $\hat{y}_{i2}$ groß. Für den "worst case" gilt:

$$\hat{y}_{i2} = y \Rightarrow r = y - y = 0$$

Dies bedeutet, daß der Fehler nicht detektierbar ist. Dieser Fall kann aber nur dann auftreten, wenn die Größe des Fehlers im Bereich der Modellungenauigkeit liegt. Damit wird auch gezeigt, daß die Leistungsgrenze des Überwachungskonzeptes im wesentlichen von der Modellungenauigkeit bestimmt wird.

Wie bereits erläutert wurde, setzt das Konzept der Residuenerzeugung eine Prüfung der Modellgültigkeit voraus. Diese besteht aus einer Prüfung der Zuverlässigkeit der Signale, die zur Residuenerzeugung verwendet werden sollen, sowie einer Prüfung der Modellgültigkeit entsprechend der Fahrsituation.

Ein Signal wird als zuverlässig bezeichnet, wenn es software- oder hardwaremäßig geprüft ist. Die zuverlässigen Signale können entweder Signale aus den anderen Teilfunktionen des Systems oder Signale aus den anderen Sensoren sein, was eine gegenseitige Überwachung bedeutet. Dies sind die On-Line-Informationen, die zur Bildung des Mehrfachmodells genutzt werden.

Wie bereits gezeigt wurde, hängt das erzeugte Residuum stark von der Modellungenauigkeit ab, die sich wiederum durch unterschiedliche Fahrsituationen beeinflussen läßt. Es ist daher wünschenswert, eine Residuenauswerteeinheit zu entwickeln, die sich adaptiv den Fahrsituationen anpaßt.

Wie allgemein bekannt ist, läßt sich das Fahrverhalten während einer stationären Fahrt sehr genau beschreiben. Im Gegensatz dazu ist ein hochdynamisches Fahrmanöver mathematisch schwer nachzubilden. Es ist daher vorteilhaft, Fahrsituationen von Fall zu Fall zu unterscheiden und auf dieser Basis die Überwachungsschwellen und -zeiten adaptiv einzustellen. Die Anpassung der Überwachungsschwellen soll einerseits dazu führen, daß beim Auftreten eines unplausiblen Sensorsignals eine Fehlermeldung rechtzeitig ausgelöst wird, und andererseits falsche Fehlermeldungen, die aufgrund der Ungenauigkeit der Nachbildung verursacht werden können, verhindert werden. Dies bedeutet, daß in einer Fahrsituation, in der die Genauigkeit der Sensorsignalnachbildung gering ist, die Schwelle hoch und die Überwachungszeit lang eingestellt und im anderen Fall die Schwelle abgesenkt und die Überwachungszeit verkürzt werden muß.

Nachfolgend soll nun die Umsetzung des im letzten Abschnitt vorgestellten Konzeptes zur Überwachung der drei wichtigen ESP-Sensoren nämlich Gierratensensor, Querbeschleunigungssensor und Lenkradwinkelsensor beschrieben werden.

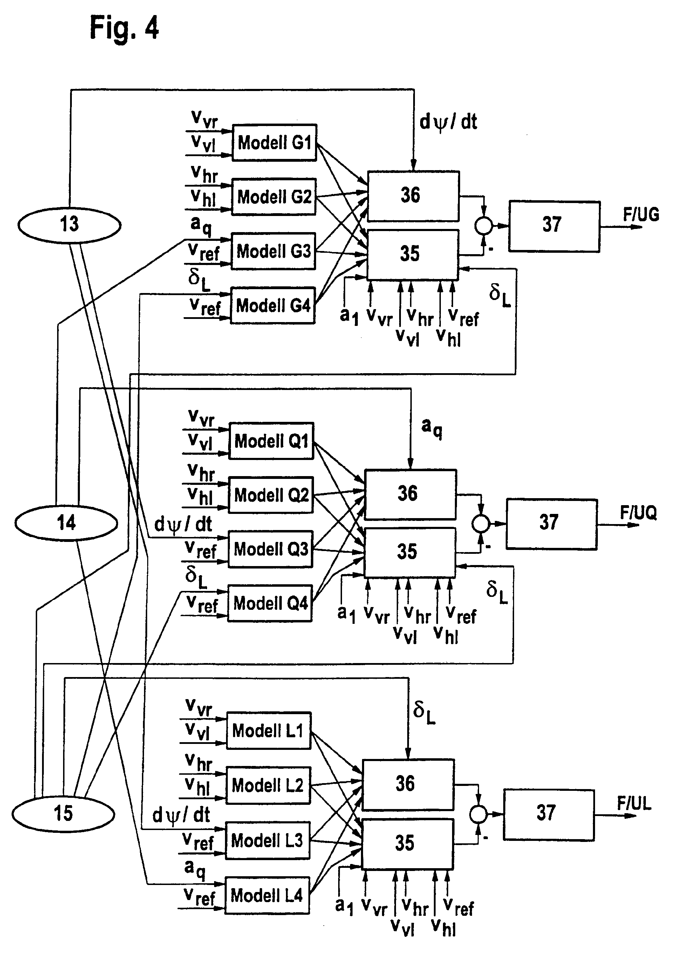

Figur 4 zeigt die Struktur des modellgestützten Überwachungssystems für die ESP-Sensoren, nämlich einen Gierratensensor 13, einen Querbeschleunigungssensor 14 und einen Lenkwinkelsensor 15. Für die Überwachung jedes ESP-Sensors stehen vier redundante Modelle zur Verfügung, solange diese gültig sind. Dies sind für den Gierratensensor 13 die Modelle G1 bis G4, für den Querbeschleunigungssensor 14 die Modelle Q1 bis Q4 und für den Lenkwinkelsensor 15 die Modelle L1 bis L4. Die mathematische Realisierung der Prozeßmodelle und ihre Gültigkeit ist in Tabelle 1 zusammengefaßt. Die in der Tabelle verwendeten Symbole haben folgende Definition:

$\dot{\psi}_m$ - Modellgierrate,

$a_{qm}$ - Modellquerbeschleunigung;

$\delta_{l,m}$ Modellenkradwinkel;

$\dot{\psi}$ - Gierrate;

$a_q$ - Querbeschleunigung;

$\delta_L$ - Lenkradwinkel;

$i_L$ - Lenkübersetzung;

l - Radstand;

S - Spurweite des Fahrzeugs;

$v_{ch}$ - charakteristische Fahrgeschwindigkeit.

Tabelle 1:

| Tabelle 1 | Gleichungen | Gültigkeitsbedingungen |
|---|---|---|
| Modell G1 | $\dot{\psi}_m = \dfrac{v_{vr} - v_{vl}}{S}$ | Die vorderen zwei Räder sind nicht in Schlupf, ihre Fehlerflags sind nicht gesetzt und die Nachbildung liegt im gültigen Bereich. |
| Modell G2 | $\dot{\psi}_m = \dfrac{v_{hr} - v_{hl}}{S}$ | Die hinteren zwei Räder sind nicht in Schlupf, ihre Fehlerflags sind nicht gesetzt und die Nachbildung liegt im gültigen Bereich. |
| Modell G3 | $\dot{\psi}_m = \dfrac{a_q}{v_{ref}}$ | Die Fahrgeschwindigkeit muß größer als Null sein. |
| Modell G4 | $\dot{\psi}_m = \dfrac{\delta_L}{i_l l} \dfrac{v_{ref}}{(1 + (\frac{v_{ref}}{v_{ch}})^2)}$ | keine Gegenlenkung, keine große Lenkung bei hoher Fahrzeuggeschwindigkeit. |
| Modell Q1 | $a_{qm} = v_{ref} \dfrac{v_{vr} - v_{vl}}{S}$ | siehe Bedingungen von Modell G1 |
| Modell Q2 | $a_{qm} = v_{ref} \dfrac{v_{hr} - v_{hl}}{S}$ | siehe Bedingungen von Modell G2 |

(fortgesetzt)

| Tabelle 1 | Gleichungen | Gültigkeitsbedingungen |
|---|---|---|
| Modell Q3 | $$a_{q_m} = v_{ref}\, \dot{\psi}$$ | -- |
| Modell Q4 | $$a_{q_m} = \frac{\delta_L}{i_L l} \frac{v_{ref}^2}{(1 + (\frac{v_{ref}}{v_{ch}})^2)}$$ | -- |
| Modell L1 | $$\delta_{L.m} = \frac{i_L l}{v_{ref}} (1 + (\frac{v_{ref}}{v_{ch}})^2)(\frac{v_{vr} - v_{vl}}{S})$$ | siehe Bedingungen von Modell G1 und G3 |
| Modell L2 | $$\delta_{L.m} = \frac{i_L l}{v_{ref}} (1 + (\frac{v_{ref}}{v_{ch}})^2)(\frac{v_{hr} - v_{hl}}{S})$$ | siehe Bedingungen von Modell G2 und G3 |
| Modell L3 | $$\delta_{L.m} = \frac{i_L l}{v_{ref}} (1 + (\frac{v_{ref}}{v_{ch}})^2)\dot{\psi}$$ | siehe Bedingungen von Modell G3 |
| Modell L4 | $$\delta_{L_m} = \frac{i_L l}{v_{ref}^2} (1 + (\frac{v_{ref}}{v_{ch}})^2)a_q$$ | siehe Bedingungen von Modell G3 |

Die Modelle sind in die erste Einrichtung 31 implementiert, wobei als Eingangsgrößen zur Errechnung der Redundanzen und somit zur Ermittlung der Residuen folgende Signale eingesetzt werden können:

$v_{vr}$ - Radgeschwindigkeit vorne rechts;

$v_{vl}$ - Radgeschwindigkeit vorne links;

$v_{hr}$ - Radgeschwindigkeit hinten rechts;

$v_{hl}$ - Radgeschwindigkeit hinten links und

$v_{ref}$ - Fahrzeuggeschwindigkeit;

die mit der Teilfunktion des Antiblockiersystems erzeugt werden, sowie die Gierrate, die Querbeschleunigung und der Lenkwinkel, die von den drei zu überwachenden ESP-Sensoren 13, 14 bzw. 15 stammen. Die errechneten Redundanzen liegen zusammen mit dem jeweils zu überwachenden Sensorsignal an der dritten Einrichtung 36 zur Residuenbildung und - auswertung (die in dieser Darstellung auch die zweite Einrichtung 33 umfaßt) an. Nach Differenzbildung zwischen dem jeweiligen Residuum und dem durch die vierte Einrichtung 35 erzeugten Schwellwert wird mit der fünften Einrichtung 37 die Fehlermeldung F/UG für den Gierratensensor 13, F/UQ für den Querbeschleunigungssensor 14 bzw. F/UL für den Lenkwinkelsensor 15 erzeugt, wenn die Differenz einen bestimmten Wert übersteigt. In Figur 4 sind die dritte, vierte und fünfte Einrichtung 36, 35, 37 für jeden Sensor 13, 14, 15 getrennt dargestellt.

Die Prüfung der Signalzuverlässigkeit erfolgt bei den mit dem Antiblockiersystem erzeugten Signalen durch das dort bestehende Überwachungssystem. Tritt keine Fehlermeldung auf, werden die Signale als zuverlässig und bei einer Fehlermeldung als nicht einsetzbar eingestuft.

Im Falle der drei oben genannten ESP-Sensorsignale (Gierrate, Querbeschleunigung, Lenkwinkel) wird bei dem hier beschriebenen Sensorüberwachungssystem das betreffende Signal als zuverlässig eingestuft, wenn keine Fehlermeldung vorliegt, und das System wird stillgelegt, wenn eine Fehlermeldung auftritt.

Wie oben bereits erwähnt wurde, ist die Methode "Majoritätsprinzip" empfindlich gegenüber einem Sensorfehler, wenn ein Sensor defekt ist, während die Methode "Minimum of all" robuster gegenüber einer Systemstörung und einem instationären bzw. extremen Fahrverhalten ist. Das im letzten Abschnitt vorgestellte Überwachungskonzept wird wie folgt umgesetzt:

Wenn die Anzahl der gültigen Modelle kleiner als drei ist, wird das Residuum nach dem Prinzip "Minimum of all" erzeugt. Andernfalls wird das Residuum nach dem "Majoritätsprinzip" gebildet.

Theoretisch gelten alle diese Prozeßmodelle nur im stationären beziehungsweise linearen Bereich der Fahrdynamik. Wenn die Fahrverhalten nicht mehr in diesem Bereich liegen, müssen sowohl die Überwachungsschwellen erhöht, als auch die Überwachungszeiten verlängert werden. Dies erfolgt durch eine Situationserkennung in der vierten Einrichtung (Schwellwertberechnung) 35 sowie eine Feststellung des Grades der Abweichung des Fahrverhaltens von dem stationären beziehungsweise linearen Bereich (vgl. Figur 4). Die dazu verwendeten Signale sind: die Fahrzeuggeschwindigkeit $v_{ref}$, die vier Radgeschwindigkeiten $v_{vr}$, $v_{vl}$, $v_{hl}$, $v_{hr}$, die Fahrzeuglängsbeschleunigung $a_l$, die ebenfalls aus der Teilfunktion ABS entstanden ist und dort geprüft wird, sowie die errechneten Redundanzen und die anderen ESP-Sensorsignale.

Diese Überwachungsschwellen und -zeiten werden durch Untersuchungen des Fahrzeugverhaltens bei verschiedenen Fehlerarten in verschiedenen Fahrsituationen ermittelt bzw. festgelegt. Bei einer erkannten Änderung des Gierratensensorsignals mit großem Gradienten, die keines der möglichen Fahrmanöver betrifft, wird die Überwachungszeit deutlich verkürzt.

Die Anpassung der Überwachungsschwellen und -zeiten ist in vereinfachter Form in Tabelle 2 zusammengefaßt:

Tabelle 2:

| Tabelle 2: Überwachungsschwellen und -zeiten | | | | |
|---|---|---|---|---|
| Fahrsituation | Genauigkeit der Prozeßmodelle | Überwachungsschwelle | Überwachungszeit | |
| | | | Fehler mit hohem Gradient | sonst |
| stationäre Fahrten: Geradeausfahrt und stationäre Kreisfahrt | sehr genau | klein | sehr kurz | kurz |
| instationäre Fahrten, deren Fahrverhalten in der Nähe vom stationären bzw. linearen Bereich liegen, z. B. Wechselmanöver | nicht genau | groß | sehr kurz | lang |
| Fahrverhalten, die sehr weit vom stationären bzw. linearen Bereich liegen, z. B. Schleudermanöver | nicht darstellbar | unendlich groß (keine Überwachung) | unendlich lang (keine Überwachung) | |

Die Struktur der Hardware-Realisierung ist in Figur 5 dargestellt. Diese Struktur umfaßt ein Mikroprozessorsystem 40, dessen Ausgangssignale einer Einheit 41 zum Bremsen- oder Motoreingriff zugeführt wird.

Das Mikroprozessorsystem 40 umfaßt einen Analog/DigitalWandler 401 zur Wandlung der analogen Sensorsignale und ei nen daran angeschlossenen digitalen Regelalgorithmus 402, an den ein Digital/Analog-Wandler 403 zur Erzeugung der analogen Ausgangssignale angeschlossen ist. Die digitalen Sensorsignale werden außerdem einem Überwachungssystem 404 zugeführt, an dem auch die von dem digitalen Regelalgorithmus 402 erzeugten Systemgrößen anliegen und das dieser Einheit 402 eine Fehlermeldung übermittelt.

Das ESP-System, das sowohl den digitalen Regelalgorithmus, als auch den Überwachungssystem umfaßt, wird vorzugsweise in C-Sprache programmiert und anschließend auf dem Mikro prozessorsystem 40 implementiert. Die Eingangssignale des Mikroprozessorsystems 40 sind die durch die im Fahrzeug 42 eingebauten Sensoren 43 erzeugten Signale. Die Ausgangssignale des Mikroprozessorsystems 40 sind die Stellgrößen, die zur Steuerung des Bremsen- oder Motormanagementsystems 41 geführt werden. Das Überwachungssystem 404 läuft parallel zu einem Regelsystem, überwacht das Gesamtsystem und beeinflußt daher die Regelung nicht, wenn keine Fehler festgestellt werden. Wenn ein Fehler entdeckt wird, sendet das Überwachungssystems 404 eine Fehlermeldung an den digitalen Regelalgorithmus 402, der damit das ESP-System deaktiviert.

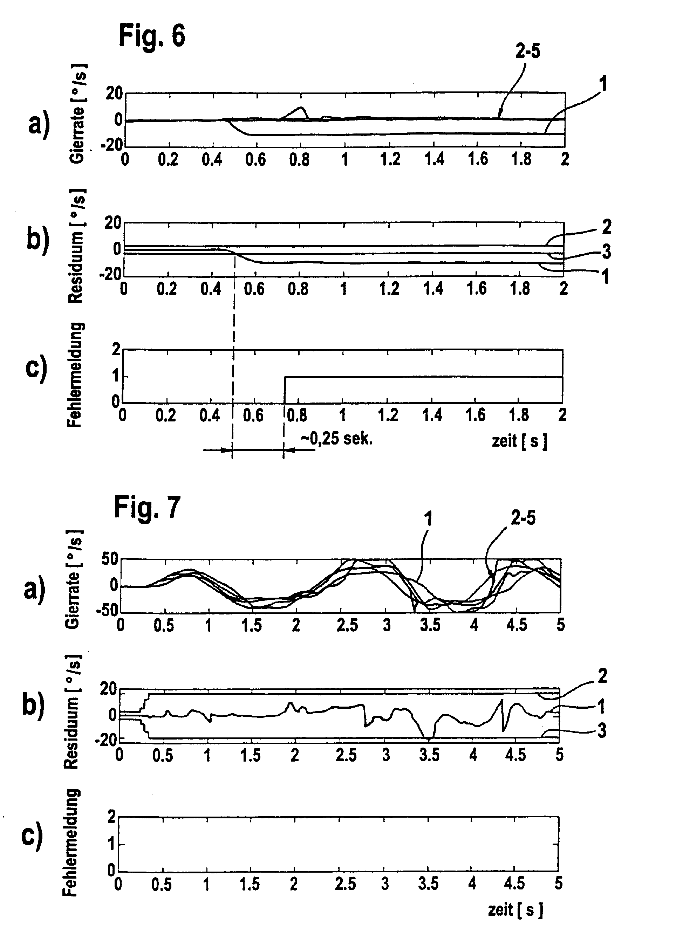

Das Überwachungssystem wurde mit zahlreichen Fahrversuchen getestet. Als Beispiel sind in den Figuren 6a, b, c die Meßergebnisse von zwei Testfahrten gezeigt, und zwar das Ergebnis einer Fehlersimulation des Gierratensensors bei Geradeausfahrt. Figur 6a zeigt das Signal des Gierratensensors (Linie 1) sowie seine vier Nachbildungen (Linien 2 bis 5). Figur 6b zeigt den Verlauf des Residuums (Linie 1) und die Schwelle (Linie 2 und 3). In Figur 6c ist schließlich dargestellt, wann eine Fehlermeldung ausgelöst wird.

Aus diesen Darstellungen wird deutlich, daß die Gierrate sehr genau beschrieben werden kann. Der simulierte Fehler wurde innerhalb von 0,25 Sekunden erkannt, bevor die Giermomentregelung mit hohem Druck auf ein Rad einwirkte.

Die Figuren 7a, b, c zeigen schließlich die Meßergebnisse einer Überwachung des Gierratensensors bei einer Fahrt mit einem Wedelmanöver. Während eines solchen Wedelmanövers kann die Gierrate wegen der Phasenverschiebung zwischen dem Sensorsignal und den Modellsignalen nicht genau beschrieben werden. In diesen Situationen läßt sich eine solche Modellungenauigkeit bei einer Modellbildung generell nicht vermeiden. Um zu verhindern, daß ein falscher Alarm ausgelöst wird, wird deshalb die Überwachungschwelle schon am Anfang des Wedelns erhöht. Figur 7a zeigt wiederum das Signal des Gierratensensors (Linie 1) sowie seine vier Nachbildungen (Linien 2 bis 5). In Figur 7b sind der Verlauf des Residuums (Linie 1) und die Schwelle (Linie 2 und 3) dargestellt, während sich aus Figur 7c ergibt, daß keine Fehlermeldung ausgelöst wurde.

Insgesamt wird also ein Verfahren und eine Vorrichtung zur Sensorüberwachung bei einem ESP-System beschrieben, bei dem der Kern in einer mehrfachmodellgestützten Erzeugung von Residuen besteht, deren Entwicklung in erster Linie unter Berücksichtigung der Fahrdynamik und der praktischen Realisierbarkeit und Einsetzbarkeit erfolgt. Mit der Sensorüberwachung können Sensorfehler und insbesondere solche mit großem Gradient während der Fahrt entdeckt werden. Das Überwachungssystem bietet eine hohe Zuverlässigkeit, da es einerseits gegen Modellungenauigkeiten eine hohe Robustheit und andererseits für Sensorfehler eine hohe Empfindlichkeit aufweist.

## Patentansprüche

1. Verfahren zur Überwachung von Fahrzeug-Sensoren, die jeweils einzelne Prozeßführungs- oder Prozeßmeßgrößen eines fahrdynamischen Prozesses eines elektronischen Fahrstabilitätsprogramms erfassen, **gekennzeichnet durch** eine parallel zu dem elektronischen Fahrstabilitätsprogramm ablaufende zyklisch-sequentielle Überwachung des Verlaufes der Ausgangs-signale mindestens eines Gierratensensors, eines Querbeschleunigungssensors und eines Lenkwinkelsensors mit folgenden Schritten:

   Erstellen analytischer Redundanzen ($\hat{y}$) für die aktuell zu überwachende Gierrate, Querbeschleunigung und den Lenkwinkel (C) aus aktuell nicht zu überwachenden Prozeßführungs- und/oder Prozeßmeßgrößen (A, B) eines aktuell betriebenen fahrdynamischen Prozesses (32) mittels eines Mehrfachprozeßmodells (31; G1-G4; Q1-Q4; L1-L4) für einen Normalbetrieb,
   Erzeugen von Residuen (r) **durch** Subtraktion der erstellten, redundanten analytischen Redundanzen ($\hat{y}$) von der aktuell zu überwachenden Gierrate, Querbeschleunigung und den Lenkwinkel (C),
   Auswerten der Residuen (r) mit einer Residuenauswertefunktion und
   Vergleichen des ausgewerteten Residuums mit einem vorgegebenen Schwellwert und Erzeugen einer Fehlermeldung (F), wenn das Residuum den Schwellwert für mindestens eine vorbestimmte Überwachungszeit erreicht, wobei die Überwachungszeiten adaptiv an den aktuellen Prozeßzustand angepaßt werden und Deaktivieren des elektronischen Fahrstabilitätsprogramms, wenn die Fehlermeldung erzeugt wird.

2. Verfahren nach Anspruch 1, **dadurch gekennzeichnet, daß** das Mehrfachprozeßmodell aus einer Mehrzahl von Teilmodellen (G1-G4; Q1-Q4; L1-L4) gebildet wird, mit denen jeweils die zu überwachende Prozeßführungs- oder Prozeßmeßgröße (C), also Gierrate, Querbeschleunigung oder Lenkwinkel, aufgrund von physikalischen Gesetzmäßigkeiten mit Hilfe anderer physikalischer Größen, wie den nicht zu überwachenden Prozeßführungs- oder Prozeßmeßgrößen (A, B), den Raddrehgeschwindigkeiten ($v_{vl}$, $v_{vr}$, $v_{hl}$, $v_{hr}$), dem Radstand (1), der Spurweite (S) sowie der Geschwindigkeit eines Fahrzeugs ($v_{ref}$), die ebenfalls aus den vier Radgeschwindigkeiten ermittelt wird, rekonstruierbar ist.

3. Verfahren nach einem der Ansprüche 1 bis 2, **dadurch gekennzeichnet, daß** die Residuenauswertefunktion bei einem instationären, durch eine starke Modellungenauigkeit geprägten Prozeßzustand durch einen Algorithmus nach einem "Minimum of all"-Prinzip gebildet wird, bei dem das kleinste aller erzeugten Residuen mit dem Schwellwert verglichen wird, und bei einem stationären, durch eine geringe Modellungenauigkeit geprägten Prozeßzustand ein Algorithmus nach einem "Majoritätsprinzip" vorgesehen ist, bei dem ein Mittelwert der analytischen Redundanzen

**11**

gebildet und zur Erzeugung des mit dem Schwellwert zu vergleichenden Residuums diejenige analytische Redundanz verwendet wird, die die mittlere von drei Redundanzen mit den geringsten Abweichungen vom Mittelwert ist.

4. Verfahren nach Anspruch 3, **dadurch gekennzeichnet, daß** in dem Fall, in dem die Anzahl der gültigen Modelle kleiner als drei ist, das Residuum nach dem Prinzip "Minimum of all" und andernfalls das Residuum nach dem "Majoritätsprinzip" gebildet wird.

5. Verfahren nach einem der vorhergehenden Ansprüche, **gekennzeichnet durch** den Schritt des Berechnens und Anpassens der Schwellwerte in Abhängigkeit von einem Prozeßzustand anhand der nicht zu überwachenden Prozeßführungs- und der Prozeßmeßgrößen (A, B) sowie der Raddrehgeschwindigkeiten ($v_{vl}$, $vv_r$, $v_{hl}$, $v_{hr}$) und der Fahrzeuggeschwindigkeit ($v_{ref}$) in der Weise, daß einerseits beim Auftreten eines unplausiblen Sensorsignals rechtzeitig eine Fehlermeldung ausgelöst und andererseits falsche Fehlermeldungen aufgrund einer großen Modellungenauigkeit vermieden werden.

6. ESP-System für Fahrzeuge, **gekennzeichnet durch** eine Vorrichtung zur zyklischen Überwachung eines Gierratensensors (13), eines Querbeschleunigungssensors (14) und eines Lenkwinkelsensors (15), die jeweils einzelne Prozeßführungs- oder Prozeßmeßgrößen eines fahrdynamischen Prozesses erfassen, umfassend eine erste Einrichtung (31) zur Berechnung analytischer Redundanzen für eine aktuell zu überwachende Prozeßführungs- oder Prozeßmeßgröße (C) aus aktuell nicht zu überwachenden Prozeßführungs- und/oder Prozeßmeßgrößen (A, B) eines aktuell betriebenen fahrdynamischen Prozesses (32) mittels eines Mehrfachprozeßmodells (G1-G4; Q1-Q4; L1-L4) für einen Normalbetrieb,
eine zweite Einrichtung (33) zur Erzeugung von Residuen (r) **durch** Subtraktion der errechneten, redundanten analytischen Redundanzen von der aktuell zu überwachenden Prozeßführungs- oder Prozeßmeßgröße (C),
eine dritte Einrichtung (36) zur Auswertung der Residuen mit einer Residuenauswertefunktion,
eine vierte Einrichtung (35) zur Erzeugung eines Schwellwertes, sowie
eine fünfte Einrichtung (37) zum Vergleichen des ausgewerteten Residuums (r) mit dem Schwellwert und zum Erzeugen einer Fehlermeldung (F), wenn das Residuum den Schwellwert für mindestens eine vorbestimmte Überwachungszeit erreicht, wobei das ESP-System deaktiviert wird, wenn eine Fehlermeldung auftritt.

7. ESP-System nach Anspruch 6, **dadurch gekennzeichnet, daß** der vierten Einrichtung (35) die aktuell nicht zu überwachenden Prozeßführungs- und/oder Prozeßmeßgrößen (A, B) zugeführt werden, um mit Hilfe einer Situationserkennung den Schwellwert bei einer relativ hohen Ungenauigkeit des Mehrfachprozeßmodells anzuheben und bei einer relativ geringen Ungenauigkeit des Mehrfachprozeßmodells abzusenken.

8. ESP-System nach Anspruch 6 oder 7, **dadurch gekennzeichnet, daß** die erste bis fünfte Einrichtung durch ein Mikroprozessorsystem (40) realisiert ist.

**Claims**

1. Method for monitoring vehicle sensors which each detect individual process-control variables or process-measuring variables of a vehicle movement dynamics process of an electronic driving stability program, **characterized by** cyclical/sequential monitoring of the profile of the output signals of at least one yaw rate sensor, of a lateral acceleration sensor and of a steering angle sensor, occurring parallel with the electronic driving stability program, having the following steps:

producing analytical redundancies ($\hat{y}$) for the yaw rate which is to be currently monitored, lateral acceleration and the steering angle (C) from process-control variables and/or process-measuring variables (A, B), currently not to be monitored, of a currently operated vehicle movement dynamics process (32) by means of a multiple process model (31; G1-G4; Q1-Q4; L1-L4) for a normal operating mode,
generating residues (r) by subtracting the produced, redundant analytical redundancies ($\hat{y}$) from the yaw rate which is to be currently monitored, lateral acceleration and the steering angle (C),
evaluating the residues (r) with a residue evaluation function, and
comparing the evaluated residue with a predefined threshold value and generating a fault message (F) if the residue reaches the threshold value for at least one predetermined monitoring time, wherein monitoring times are adapted to the current process state, and deactivating the electronic driving stability program if the fault message is generated.

2. Method according to Claim 1, **characterized in that** the multiple process model is formed from a plurality of partial models (G1-G4; Q1-Q4; L1-L4), in which in each case the process-control variable or process-measuring variable (C) to be monitored, that is to say the yaw rate, lateral acceleration or steering angle, can be reconstructed on the basis of physical laws using other physical variables, such as the process-control variables or process-measuring variables (A, B) which are not to be monitored, the wheel speeds ($v_{fl}$, $v_{fr}$, $v_{rl}$, $v_{rr}$), the wheel base (1), the track width (S) and the speed of a vehicle ($v_{ref}$), which is also determined from the four wheel speeds.

3. Method according to one of Claims 1 to 2, **characterized in that** the residue evaluation function in the case of a non-steady-state process state which is impressed by a high degree of model inaccuracy is formed by an algorithm according to a "minimum of all" principle in which the smallest of all the generated residues is compared with the threshold value, and in the case of a steady-state process state, impressed by a low degree of model inaccuracy, an algorithm is provided according to a "majority principle" in which a mean value of the analytical redundancies is formed, and that analytical redundancy which is the central one of three redundancies with the lowest deviations from the mean value is used to generate the residue which is to be compared with the threshold value.

4. Method according to Claim 3, **characterized in that** if the number of valid models is less than three, the residue is formed according to the "minimum of all" principle and, otherwise, the residue is formed according to the "majority principle".

5. Method according to one of the preceding claims, **characterized by** the step of calculating and adapting the threshold values as a function of a process state on the basis of the process-control variables and the process-measuring variables (A, B) which are not to be monitored, as well as the wheel speeds ($v_{fl}$, $v_{fr}$, $v_{rl}$, $v_{rr}$) and of the vehicle speed ($v_{ref}$) in such a way that, on the one hand, when an implausible sensor signal occurs a fault message is triggered in good time, and, on the other hand, incorrect fault messages owing to a high degree of model inaccuracy are avoided.

6. ESP system for vehicles, **characterized by** a device for cyclically monitoring a yaw rate sensor (13), a lateral acceleration sensor (14) and a steering angle sensor (15) which each sense individual process-control variables or process-measuring variables of a vehicle movement dynamics process, comprising a first device (31) for calculating analytical redundancies for a process-control variable or process-measuring variable (C) to be monitored, from process-control variables and/or process-measuring variables (A, B), which are currently not to be monitored, of a currently operated vehicle movement dynamics process (32) by means of a multiple process model (G1-G4; Q1-Q4; L1-L4) for a normal operating mode,
a second device (33) for generating residues (r) by subtracting the calculated, redundant analytical redundancies from the process-control variable or process-measuring variable (C) which is currently to be monitored,
a third device (36) for evaluating the residues with a residue evaluation function,
a fourth device (35) for generating a threshold value, and
a fifth device (37) for comparing the evaluated residue (r) with the threshold value and for generating a fault message (F) if the residue reaches the threshold value for at least one predetermined monitoring time, wherein the ESP system is deactivated if a fault message occurs.

7. ESP system according to Claim 6, **characterized in that** the process-control variables and/or process-measuring variables (A, B) which are currently not to be monitored are fed to the fourth device (35) in order, with the aid of a situation detection, to raise the threshold value in the case of relatively high inaccuracy of the multiple process model and to lower said threshold value in the case of relatively low inaccuracy of the multiple process model.

8. ESP system according to Claim 6 or 7, **characterized in that** the first to fifth devices are implemented by a microprocessor system (40).

## Revendications

1. Procédé de surveillance de détecteurs de véhicules qui saisissent tous différentes grandeurs de guidage ou de mesure d'un processus de dynamique de roulage d'un programme électronique de stabilité du roulage, **caractérisé par**
une surveillance cyclique-séquentielle, qui se déroule parallèlement dans le programme électronique de stabilité du roulage, de l'évolution des signaux de sortie d'un détecteur de vitesse de lacet, d'un détecteur d'accélération transversale et/ou d'un détecteur d'angle de direction, le procédé comportant les étapes suivantes :

établissement de redondances analytiques ($\hat{y}$) de la vitesse de lacet, de l'accélération transversale et de l'angle de direction (C) à surveiller à chaque instant à partir de grandeurs de guidage et/ou de grandeurs de mesure du processus (A, B), qui ne sont pas surveillées à cet instant, d'un processus de dynamique de roulage (32) utilisé à cet instant, au moyen d'un modèle (31; G1-G4; Q1-Q4; L1-L4) de plusieurs processus prévus pour un fonctionnement normal,

formation de résidus (r) par soustraction des redondances analytiques ($\hat{y}$) établies par rapport à la vitesse de lacet, à l'accélération transversale et à l'angle de direction (C) à surveiller à tout instant,

évaluation des résidus (r) par une fonction d'évaluation de résidus et

comparaison du résidu évalué à une valeur de seuil prédéterminée et formation d'un message d'erreur (F) lorsque le résidu atteint la valeur de seuil pendant au moins une durée de surveillance prédéterminée, les durées de surveillance étant adaptées à l'état du processus à cet instant et désactivation du programme électronique de stabilité du roulage lorsque le message d'erreur est formé.

2. Procédé selon la revendication 1, **caractérisé en ce que** le modèle de plusieurs processus est formé de plusieurs modèles partiels (G1-G4; Q1-Q4; L1-L4) par lesquels les différentes grandeurs de guidage ou de mesure (C) à surveiller, c'est-à-dire la vitesse de lacet, l'accélération transversale ou l'angle de direction, peuvent être reconstruites sur la base de lois physiques à l'aide d'autres grandeurs physiques, par exemple des grandeurs de guidage ou de mesure de processus (A, B) qui ne doivent pas être surveillées, les vitesses de rotation des roues ($v_{vl}$, $v_{vr}$, $V_{hl}$, $V_{hr}$) l'empattement (1), la largeur de voie (S) ainsi que la vitesse d'un véhicule ($v_{ref}$) qui est également déterminée à partir des vitesses des quatre roues.

3. Procédé selon l'une des revendications 1 et 2, **caractérisé en ce que** la fonction d'évaluation des résidus est formée par un algorithme fonctionnant selon un principe de "minimum absolu" lors d'un état non stationnaire du processus affecté d'une forte imprécision du modèle et dans lequel le plus petit de tous les résidus formés est comparé à la valeur de seuil et par un algorithme fonctionnant selon un "principe de majorité" pour un état stationnaire du processus, **caractérisé par** une faible imprécision du modèle et dans lequel une valeur moyenne des redondances analytiques est formée et est utilisée pour former la redondance analytique du résidu qui doit être comparée à la valeur de seuil et qui est la moyenne des trois redondances qui présentent les plus petits écarts par rapport à la valeur moyenne.

4. Procédé selon la revendication 3, **caractérisé en ce qu'**au cas où le nombre des modèles valides est inférieur à trois, le résidu est formé selon le principe du "minimum absolu", le résidu étant formé selon le "principe de majorité" dans les autres cas.

5. Procédé selon l'une des revendications précédentes, **caractérisé par** l'étape de calcul et d'adaptation des valeurs de seuil en fonction de l'état du processus à l'aide des grandeurs de guidage et de mesure (A, B) du processus qui ne doivent pas être surveillées ainsi que des vitesses de rotation des roues ($v_{vl}$, $v_{vr}$, $V_{hl}$, $v_{hr}$) et de la vitesse du véhicule ($v_{ref}$) en émettant un message d'erreur lorsqu'un signal de détecteur non plausible survient, et en évitant d'autre part de faux messages d'erreur qui résulteraient d'une grande imprécision du modèle.

6. Système ESP pour véhicules, **caractérisé par** un dispositif de surveillance cyclique d'un détecteur (13) de vitesse de lacet, d'un détecteur (14) d'accélération transversale et d'un détecteur (15) d'angle de direction qui saisissent tous différentes grandeurs de guidage ou de mesure d'un processus de dynamique de roulage, le système comportant un premier dispositif (31) de calcul de redondances analytiques d'une grandeur de guidage ou de mesure (C) qui doit être mesurée à cet instant à partir de grandeurs de guidage et/ou de mesure (A, B) du processus qui ne doivent pas être surveillées à cet instant d'un processus (32) de dynamique de roulage utilisé à cet instant, au moyen d'un modèle (G1-G4; Q1-Q4; L1-L4) de plusieurs processus prévus pour un fonctionnement normal,

un deuxième dispositif (33) servant à former des résidus (r) par soustraction des redondances analytiques établies par rapport à la vitesse de lacet, à l'accélération transversale et à l'angle de direction (C) à surveiller à tout instant,

un troisième dispositif (36) d'évaluation des résidus par une fonction d'évaluation de résidus,

un quatrième dispositif (35) de formation d'une valeur de seuil et

un cinquième dispositif (37) qui compare le résidu (r) évalué à la valeur de seuil et qui forme un message d'erreur (F) lorsque le résidu atteint la valeur de seuil pendant au moins une durée de surveillance prédéterminée, le système ESP étant désactivé lorsqu'un message d'erreur survient.

7. Système ESP selon la revendication 6, **caractérisé en ce que** les grandeurs de guidage et/ou de mesure (A, B) qui ne doivent pas être surveillées à un moment donné sont apportées au quatrième dispositif (35) pour, à l'aide d'une reconnaissance de situation, relever la valeur de seuil lorsque le modèle à plusieurs processus présente une imprécision relativement élevée et l'abaisser lorsque l'imprécision du modèle de plusieurs processus est relativement basse.

8. Système ESP selon les revendications 6 ou 7, **caractérisé en ce que** les dispositifs un à cinq sont réalisés sous la forme d'un système (40) à microprocesseur.

# Fig. 1

**Fig. 2**

# Fig. 3

A →

| 32 |

→ B

C

30

| 31 | → $\hat{y}$ → | 33 |

34

| 35 | → | 37 | ← | 36 |

r

↓ F

100

# Fig. 5

| 401 | → | 402 | → | 403 | → | 41 | → | 42 |

Systemgrößen

Fehlermeldung

| 404 |

digitale
Größen

40

analoge Größen

| 43 |

physikalische,
fahrzeugtechnische Größen

# Fig. 4

## Fig. 6

## Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5809444 A